Europäisches Patentamt

European Patent Office

Office européen des brevets

(11) Publication number : **0 648 433 A2**

# (12) EUROPEAN PATENT APPLICATION

(21) Application number : **94307371.8**

(22) Date of filing : **07.10.94**

(51) Int. Cl.$^6$ : **A23P 1/08**

(30) Priority : **13.10.93 US 137452**

(43) Date of publication of application :
**19.04.95 Bulletin 95/16**

(84) Designated Contracting States :
**AT BE CH DE DK ES FR GB GR IE IT LI LU MC NL PT SE**

(71) Applicant : **KRAFT GENERAL FOODS, INC.**
**250 North Street**
**White Plains New York 10625 (US)**

(72) Inventor : **Nayyar, Dalip Kumar**
**12 Pilgrim Lane**
**Washingtonville, New York 10992 (US)**
Inventor : **Coleman, Edward Charles**
**2 Austin Drive**
**New Fairfield, Connecticut 06812 (US)**
Inventor : **Mason, Charles Robert**
**30 Cook Avenue**
**Yonkers, New York 10701 (US)**
Inventor : **Birney, Sharon Rose**
**1753 Larkspur Street**
**Yorktown Heights, New York 10598 (US)**

(74) Representative : **Eyles, Christopher Thomas**
**W.P. THOMPSON & CO.**
**Celcon House**
**289-293 High Holborn**
**London WC1V 7HU (GB)**

(54) **Enhancement of food coating texture via addition of protein/acid/reducing sugar system.**

(57)    A coating composition for imparting a crisp, golden brown surface to foodstuffs cooked in a microwave or conventional oven in which the composition includes a protein/acid/reducing carbohydrate system. The coating composition of the present invention includes 0.5 to 10% by weight protein, 0.5 to 5.0% by weight food acid, 0.5 to 5.0% by weight reducing sugar and 55 to 97% by weight bulking agents. In a preferred embodiment, enhanced crispness and browning are obtained when the protein is dairy protein and the bulking agents include rice flour.

EP 0 648 433 A2

## FIELD OF THE INVENTION

The present invention is concerned with a coating composition for foods which produces a crisp coat when cooked. More particularly, the present invention is concerned with a coating composition which produces a crisp, golden-brown coating when applied to foodstuffs and cooked in a microwave or conventional oven.

## BACKGROUND OF THE INVENTION

Many foods such as poultry, meat, fish and vegetables are coated with a light coating of flour or bread crumbs which on frying in oil develops a characteristic crispy, brown-colored coating. However, the messiness involved with the preparation of fried foods, the ever present danger of spattering oil, and the unfavorable dietary aspects associated with fried foods have led to the development of coatings which attempt to impart a fried appearance to a foodstuff which is baked and with the appealing color, taste, and texture associated with fried foods.

U.S. Patent No. 3,586,512 by Mancuso et al. and U.S. Patent No. 3,843,827 by Lee et al. both prepare a baked comestible with a fried texture and appearance. The Mancuso et al. patent does this by providing a dye system which changes color during cooking, while the Lee et al. patent does this by providing a unique batter formulation and dry-mix coating. Other coatings have been developed for foodstuffs for the same purpose, i.e., to provide a baked food with a surface similar in appearance, color and texture to that of coated, deep, fat-fried foods, such as U.S. Patent No. 3,852,501 by Fazzina et al. However, these coatings rely on high levels of shortening to obtain the desired results.

In recent years, a number of products have been developed and marketed for coating foods prior to baking or frying. Their purpose is to produce the desirable crisp, browned coating. Such products have found considerable market acceptance, especially for the preparation of baked foods which resemble fried foods in appearance and crispness, but avoid the use of oil and other fats. These products work quite well in conventional ovens. However, when used in the recently developed microwave cooking appliances, the resulting product leaves much to be desired.

In conventional cooking, however, the surface temperature of the foodstuff far exceeds the internal temperature, which aids in the crisping and browning of the food. Since the heat energy in microwave is released internally within the food, the surface remains at a relatively even temperature with the interior. Therefore, in microwave cooking the high surface temperatures necessary to achieve browning, dehydration and crisping are never achieved since the internal moisture migrates to the food surface affecting crisping and browning on the surface of the foodstuff.

In an attempt to overcome these problems, the appliance manufacturers have resorted to including radiant browning elements within the microwave chamber. Food coating merchandisers often include brown coloring components in the coating mixes to artificially brown or golden color the food surface. This, however, does not solve the problem of surface crispness.

A further attempt was disclosed in U.S. Patent No. 4,518,618 by Hsia wherein a food coating composition having an ability to produce crisp, brown coatings on food products cooked in microwave ovens was developed. In Hsia, the coating ingredients in combination with salts, such as potassium acetate, potassium chloride and potassium bicarbonate produced a crisp-brown coating.

U.S. Patent No. 4,529,607 by Lenchin discloses a batter composition for the preparation of batter coated prefried microwavable foodstuff. In Lenchin a batter mix containing an effective amount of amylase flour is cooked in hot fat or cooking oil, and subsequently cooked to completion by means of microwaving. It is important to note that the batter in Lenchin is coated onto raw chicken and baked. The baked product is then frozen.

U.S. Patent 4,640,837 discloses a dry coating composition that includes soy protein concentrate. A bread crumb/oil blend is baked and then maltodextrin, pregelatinized starch and the soy protein concentrate are added, the composition results in a crisp golden-brown surface to foodstuffs cooked in a microwave.

The present invention is concerned with an improved food coating composition that will produce an enhanced crisp golden-brown texture to foodstuffs that are cooked in either a microwave or a conventional oven.

## SUMMARY OF THE INVENTION

The present invention is concerned with a food coating composition for imparting an enhanced, crisp golden-brown texture to foodstuff which comprises: 1 to 15% by weight non-farinaceous protein, 0.5 to 5.0% by weight food grade acid, 0.5 to 5.0% by weight reducing sugar, 0.1 to 10% hydrocolloids (e.g., gums) and 55 to 97% by weight bulking agents. The protein and reducing carbohydrate in the presence of food acids react during cooking at high temperatures to provide a Maillard type reaction that produces browning. The resulting Maillard browning is superior to the browning produced by prior art coating compositions. The Maillard browning is achieved in both conventional and microwave ovens. Enhanced crispness is also provided by including in the bulking agents 3 to 11% by weight flour. In a preferred embodiment of the invention the use of dairy proteins and rice flour results in an excellent browning and crispness upon baking in both microwaves and conventional ovens.

DETAILED DESCRIPTION OF THE INVENTION

The present invention discloses a formulation of a farinaceous coating mix for baking comestibles in both a microwave or conventional oven, which comprises proteins, food acids, hydrocolloids, reducing sugars and bulking agents. The coating mix is applied on a wet food product such as poultry, meat, fish and vegetables and then cooked in a conventional oven or in a microwave oven using a susceptor bag. A suitable susceptor bag is disclosed in U.S. Patent No. 5,227,599 to Mason, et al., which is hereby incorporated by reference. The combination of the protein, reducing carbohydrate and food grade acid produces a non-enzymatic Maillard type browning reaction during cooking. This reaction provides a coating texture having enhanced crispness and golden brown color.

The protein used in the present invention may come from one or more of added, non-farinaceous protein materials, such as dairy protein, soy protein, whey protein, sodium caseinate, gelatin, egg albumin, etc. and mixtures thereof. The levels of the protein in the coating composition should generally range from 0.5 to 10% by weight and preferably from 1 to 3% by weight of the total coating composition. The utilization of dairy proteins, which are proteins derived from milk, is a preferred embodiment of the present invention. The protein level is determined based on the actual protein content of the added protein materials.

The food acids used in the present invention are preferably anhydrous acids, and may include one or more of citric acid, lactic acid, adipic acid, malic acid, tartaric acid, fumaric acid, etc., and mixtures thereof. The level of the acid in the coating composition should generally range from 1 to 3% by weight and preferably from 1.7 to 2.3% by weight of the total coating composition.

Hydrolyzed starch solids may be employed as the source of reducing sugars in the present invention. The hydrolyzed starch solids should have a Dextrose Equivalent (DE) within the range of 5-50. The hydrolyzed starch solids includes malto-dextrins, dextrins and corn syrup solids. Alternatively, a reducing sugar may be added directly. Monosaccharides, whether aldose or ketose, are reducing sugars. Examples include glucose and fructose.

The reaction of the added protein and food grade acid with the reducing sugar during cooking produces what is known as a Maillard browning reaction. In this reaction, amino groups from the proteins react with the reducing sugars to eventually form brown uncharacterized polymers termed melanoidins. The amino groups combine with the carbonyl carbon of a reducing sugar to form a glucosyl amino compound. This initial reaction is followed by a rearrangement which yields a 1-amino-1-deoxy-2-ketose, which in turn can undergo a complex series of reactions resulting in a multiplicity of organic compounds and ultimately the melanoidins.

The coating composition of the present invention may also contain gum, typically at a level of about 2.0 to 5.0% by weight of the coating composition. The gum may be a natural, modified or synthetic gum. For example, gum arabic, gum tragacanth, locust bean gum or cellulose derivatives such as methyl cellulose, carboxy methyl cellulose or microbial gum such as xanthan gum, all of the above gums are effective as an adhesive which enhance the texture of the coating. Other edible materials which enhance the cohesive properties of the composition may also be employed in combination with the above.

The coating composition of the present invention also includes a bulking agent component that preferably is comprised of 30 to 70% by weight bread crumbs and preferably 5 to 9% by weight flour, with the percentages being by weight of the composition. The bread crumbs may be of any formulation and may be processed by any means common in the art but preferably for optimum crispness Japanese bread crumbs are employed as a major portion of the bread crumb component. By Japanese bread crumbs, what is meant is that the bread crumbs consist of essentially wheat flour, yeast and salt and have an elongated porous and striated shape and structure. A typical particle size distribution for Japanese bread crumbs is 5% on 8 mesh (U.S.), 40% on 14 mesh, 33% on 20 mesh and 22% thru 20 mesh (5% > 2.36 mm, 40% > 1.40 mm, 33% > 850μm and 22% < 850μm) . Bread crumb fines may constitute a minor portion of the bread component with a typical particle size distribution being 2% maximum on 14 mesh (U.S.), 30% maximum on 30 mesh and 10% maximum thru 100 mesh (2% maximum > 1.40 mm, 30% maximum > 600μm and 10% maximum < 150μm). The bulking agent should also contain a flour as part of the dry coating composition such as rice, wheat, potato, corn, or tapioca flour. The flour is preferably a corn and/or a rice flour.

Studies have shown that coatings of the present invention formulated with rice flour have superior crispness due to the effect of the rice, protein/starch matrix on the water holding capacity of the system. It has been

EP 0 648 433 A2

determined that the use of rice achieves optimum crispness due in part to the lower water absorptivity of rice flour. Moreover because the protein fraction is key to controlling the water holding capacity of the coating matrix, it has been determined that dairy proteins have an optimum effect thereon which makes these proteins the preferred embodiment for delivering enhanced browning and crisping effects.

Residual ingredients may also be included in the coating composition and may include salt, spices, seasoning and color and are generally employed at a level of 1 to 20%, preferably 8 to 18%, by weight of the composition. Generally the residual ingredients employed in the coating composition comprise salt, lecithin, seasoning (e.g. pepper, garlic, paprika, sugar, onion powder, monosodium glutamate, etc.), coloring blends (e.g. FD&C approved dyes, paprika, beet powder, annatto, tumeric, etc.) and minor amounts of other ingredients such as fats or oils (shortening).

The coating composition is applied to the foodstuff by first moistening the surface of the foodstuff and then coating the moistened foodstuff with the coating composition by any means common in the art. Such common means includes, but is not limited to, applying the coating composition to the moistened foodstuff in a closed bag containing the composition, or simply covering the moistened foodstuff with the coating composition. After this coating step, the coated foodstuff is then placed in an oven and baked until done. If using a microwave oven, the foodstuff may be placed in a susceptor bag prior to baking and the bag containing the foodstuff is then placed in the microwave oven and cooked.

The following examples illustrate the invention. It should be understood, however, that these examples are merely meant to be illustrative and that the invention is not to be limited thereto.

EXAMPLE 1

A coating composition was prepared containing the following ingredients:

| Ingredients | Percent by Weight |
|---|---|
| Japanese Bread Crumbs | 47.253 |
| Rice Flour | 7.429 |
| Dextrin 10DE | 6.838 |
| Corn Syrup Solids (36 DE) | 5.954 |
| Salt | 5.359 |
| Bread Crumb Fines | 4.648 |
| Buttermilk Solids (34% protein) | 4.166 |
| Gum Arabic | 3.314 |
| Whey Solids (11.5% protein) | 2.857 |
| Onion Powder | 2.382 |
| Vegetable Oil | 2.305 |
| Garlic Powder | 1.904 |
| Lactic Acid | 1.447 |
| Paprika | 1.321 |
| Parsley Flakes | .715 |
| Black Pepper | .595 |
| Citric Acid | .595 |
| Milk Powder (26% protein) | .474 |
| Buttermilk Flavor | .237 |
| Beet Powder | .207 |
| | 100.000 |

Four boneless chicken breasts (one pound) were dampened with water and coated by placing each chicken breast in a bag containing the coating composition and shaking until each breast was coated. 40 grams of coating was applied to the four chicken breasts. Each breast was then removed from the coating bag and placed in a baking pan and the pan placed in a conventional oven and cooked at 400°F (204.4°C) for 15 minutes. The resultant baked coated chicken had a very crisp golden brown coating. The crispy, brown coating had the texture and mouth feel characteristics as well as the appearance of fried chicken.

EXAMPLE 2

A coating composition was prepared containing the following ingredients:

| Ingredients | Percent by Weight |
|---|---|
| Japanese Bread Crumbs | 53.207 |
| Rice Flour | 7.429 |
| Dextrin 10DE | 6.838 |
| Salt, Mixing | 5.359 |
| Bread Crumb Fines | 4.648 |
| Butter Milk Solids | 4.166 |
| Gum Arabic | 3.314 |
| Whey Solids | 2.857 |
| Onion Powder | 2.382 |
| Vegetable Oil | 2.305 |
| Garlic Powder | 1.904 |
| Lactic Acid | 1.447 |
| Paprika | 1.321 |
| Parsley Flakes | .715 |
| Black Pepper | .595 |
| Citric Acid | .595 |
| Milk Powder | .474 |
| Buttermilk Flavor | .237 |
| Beet Powder | .207 |
| | 100.000 |

Four boneless chicken breasts (one pound) were dampened with water and coated by placing each chicken breast in a bag containing the coating composition and shaking until each breast was coated. 40 grams of coating was applied to the four chicken breasts. Each breast was then removed from the coating bag and placed in individual susceptor bags and the bags placed in a microwave oven (700 watts) and cooked at high power for 12 minutes. The resultant baked coated chicken had a very crisp golden brown coating. The crispy, brown coating had the texture and mouth feel characteristics as well as the appearance of fried chicken.

EXAMPLE 3

Comparative Example

A coating composition without added protein was prepared containing the following ingredients:

EP 0 648 433 A2

| Ingredients | Percent by Weight |
|---|---|
| Japanese Bread Crumbs | 54.750 |
| Rice Flour | 7.429 |
| Dextrin 10DE | 6.838 |
| Corn Syrup Solids | 5.954 |
| Salt, Mixing | 5.359 |
| Bread Crumb Fines | 4.648 |
| Gum Arabic | 3.314 |
| Onion Powder | 2.382 |
| Vegetable Oil | 2.305 |
| Garlic Powder | 1.904 |
| Lactic Acid | 1.447 |
| Paprika | 1.321 |
| Parsley Flakes | .715 |
| Black Pepper | .595 |
| Citric Acid | .595 |
| Buttermilk Flavor | .237 |
| Beet Powder | .207 |
| | 100.000 |

Four boneless chicken breasts (one pound) were dampened with water and coated by placing each chicken breast in a bag containing the coating composition and shaking until each breast was coated. 40 grams of coating was applied to the four chicken breasts. Each breast was then removed from the coating bag and placed in a baking pan and the pan placed in a conventional oven and cooked at 400°F (204.4°C) for 15 minutes. The resultant baked coated chicken had reduced crisping and browning as compared with the crispness and browning of the chicken cooked in EXAMPLE 1.

EXAMPLE 4

Comparative Example

A coating composition without added food acids was prepared containing the following ingredients:

7

| Ingredients | Percent by Weight |
|---|---|
| Japanese Bread Crumbs | 52.609 |
| Rice Flour | 7.429 |
| Dextrin 10DE | 6.838 |
| Corn Syrup Solids | 5.954 |
| Salt, Mixing | 5.359 |
| Bread Crumb Fines | 4.648 |
| Buttermilk Solids | 4.166 |
| Whey Solids | 2.857 |
| Onion Powder | 2.382 |
| Vegetable Oil | 2.305 |
| Garlic Powder | 1.904 |
| Paprika | 1.321 |
| Parsley Flakes | .715 |
| Black Pepper | .595 |
| Milk Powder | .474 |
| Buttermilk Flavor N/A | .237 |
| Beet Powder | .207 |
| | 100.000 |

Four boneless chicken breasts (one pound) were dampened with water and coated by placing each chicken breast in a bag containing the coating composition and shaking until each breast was coated. 40 grams of coating was applied to the four chicken breasts. Each breast was then removed from the coating bag and placed in a baking pan and the pan placed in a conventional oven and cooked at 400°F (204.4°C) for 15 minutes. The resultant baked coated chicken had reduced crisping and browning as compared with the crispness and browning of the chicken cooked in EXAMPLE 1.

The comparative studies as shown in EXAMPLES 3 and 4 were conducted on coating systems removing, respectively, the protein and the acid component versus the coating composition of the present invention. The results indicate enhanced crisping and browning is catalyzed by the acid/protein system of the present invention while cooking in a conventional or microwave oven. No such enhancement of the crispness and browning occurred when either the protein or the acid was not present in the composition.

## Claims

1. A food coating composition for imparting a crisp, golden brown texture to foodstuffs when backed comprising:

   0.5 to 10% by weight non-farinaceous protein, 0.5 to 5.0% food grade acid, 0.5 to 5.0% by weight reducing sugar, and 55 to 97% by weight bulking agent.

2. A food coating composition according to claim 1, further comprising 0.1 to 10.0% by weight hydrocolloid.

3. A food coating composition according to claim 2, wherein the hydrocolloid is a natural, modified or synthetic gum.

4. A food coating composition according to claim 3, wherein the hydrocolloid is gum at a level of 2.0 to 5.0%.

5. A food coating composition according to any one of claims 1 to 4, wherein the protein is one of dairy protein, soy protein, sodium caseinate, egg albumin, gelatin or mixtures thereof.

6. A food coating composition according to claim 5, wherein the protein is dairy protein.

7. A food coating composition according to claim 6, wherein the dairy protein is milk powder, buttermilk solids, buttermilk powder, casein and its derivatives or a combination of two or more thereof.

8. A food coating composition according to any one of claims 1 to 7, wherein the acid is lactic acid, citric acid, malic acid, tartaric acid, fumaric acid, adipic acid or a combination of two or more thereof.

9. A food coating composition according to any one of claims 1 to 8, wherein the source of reducing sugar is hydrolyzed starch solids, having a DE of 5-50.

10. A food coating composition according to claim 9, wherein the hydrolyzed starch solids is corn syrup solids, dextrins, malto-dextrins or a combination of two or more thereof.

11. A food coating composition according to any one of claims 1 to 10, wherein the bulking agent includes 30 to 70% bread crumbs and 3 to 11% flour, the percentage being by weight of the composition.

12. A food coating composition according to claim 11, wherein the flour is one of rice, wheat, potato, corn and tapioca.

13. A food coating composition according to claim 12, wherein the flour is rice flour.

14. A food coating composition according to any one of claims 1 to 13, further comprising flavor and color ingredients.

15. A food coating composition according to claim 14, wherein said flavor and color ingredients include salt, spices, seasoning and food dye.

16. A process for preparing a baked coated foodstuff with a crisp golden brown texture comprising moistening the foodstuff, coating the moistened foodstuff with a food coating composition according to any one of claims 1 to 15, and then baking the coated foodstuff.

17. A process according to claim 16, wherein the foodstuff is placed in a susceptor bag prior to baking and the foodstuff is then baked in a microwave oven.